# EUROPEAN PATENT APPLICATION

(11) **EP 2 735 401 A2**
(43) Date of publication of application: **28.05.2014**
(21) Application number: 13193718.7
(22) Date of filing: 20.11.2013
(51) Int. Cl.: B24B 9/14

(54) **Apparatus and method for processing lens by using milling cutter**

(30) Priority: 26.11.2012 KR 20120134501
(71) Applicant: Huvitz Co., Ltd., Gyeonggi-do 435-862 (KR)
(72) Inventor: Ha, Seungsuk, 472-953 Gyeonggi-Do (KR); Shim, Soonyong, 135-837 Seoul (KR); Kim, Sungjin, Gyeonggi-Do, 423-739 (KR)
(74) Representative: Pontet Allano & Associes

(57) **Abstract**

An apparatus and a method for processing a lens, which can cut off and remove an unnecessary part of the rim of a round(blank) lens by using a milling cutter operated spirally, are disclosed. The method for processing a lens comprises the steps of: getting a milling cutter in contact with the surface of the lens; and moving the milling cutter along a single spiral processing path spirally surrounding an eyeglass lens part of the central part of the lens so that the milling cutter rotates around the eyeglass lens part several times, to form grooves of predetermined depths in the lens, whereby the lens is cut and an unnecessary part of the rim of the lens is separated and removed along a shape of the eyeglass lens part. Wherein a width of each groove formed in each of rotation steps which form a single spiral processing path is partially overlapped with a width of groove formed in the former rotation step, and a depth of each groove formed in each rotation step is increased in every rotation step and finally, the lens is cut along the shape of the eyeglass lens part.

## Description

This application claims the priority benefit of Korean Patent Application No. 10-2012-0134501 filed on November 26, 2012. All disclosure of the Korean Patent application is incorporated herein by reference.

### BACKGROUND OF THE INVENTION

### Field of the Invention

The present invention relates to an apparatus and a method for processing a lens, and more particularly, to an apparatus and a method for processing an eyeglass lens, which can cut off and remove an unnecessary part of the rim of a round eyeglass lens by using a milling cutter operated spirally.

### Background Art

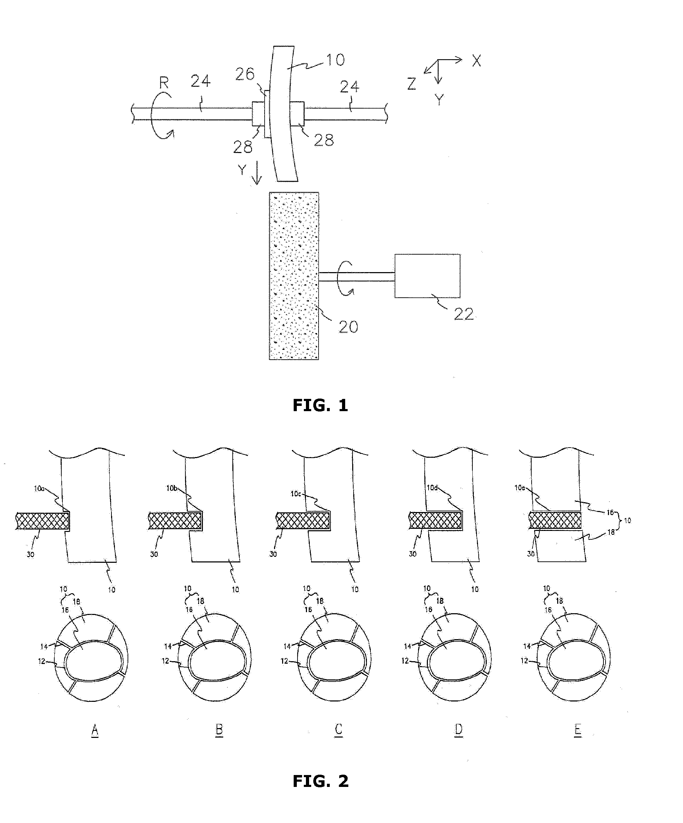

In order to manufacture eyeglasses, round lenses (generally, called 'blank lenses') commercially come onto the market are processed into the shape of wanted eyeglass lenses, for instance, the shape of an eyeglass frame. FIG. 1 illustrates a process of processing the round lens using a diamond wheel according to a prior art. As illustrated in FIG. 1, a lens edger includes a diamond wheel 20 rotated by a motor 22, and a round lens 10 fixed on a clamp 24 is opposed to the diamond wheel 20. The clamp 24 serves as a rotary shaft and a movable shaft for rotating (in an R direction) or moving (in a Y direction) the lens 10. The lens edger moves the clamp 24 in the direction of the diamond wheel 20 (in the Y direction of FIG. 1) so that the lens 10 gets in contact with the rotating diamond wheel 20, and thereby, the lens portion which gets in contact with the diamond wheel 20 is abraded. When the above-mentioned abrasion step is carried out to the entire periphery of the lens 10 while rotating the lens 10 (in the R direction), the lens 10 can be processed into a wanted shape. In order to firmly join the clamp 24 and the lens 10 with each other, a lens fixing tape 26 and a lens fixing block 28 are adhered onto one side or both sides of the lens 10, and the clamp 24 is joined to the lens fixing block 28.

In the method for processing eyeglasses using the diamond wheel 20, a contact frictional force applied to the lens 10 is increased in proportion to the thickness of the lens 10, and a friction load is also increased in proportion to the hardness of the lens 10. Therefore, in the case of a lens 10 with the slippery surface like a water-repellent coated lens, a friction force is applied to the lens 10, which is fixed by the clamp 24, in a different direction from a rotational direction (for wheel processing) of the lens 10, and hence, the position of the lens 10 is changed. Moreover, during a rotary motion of the shaft holding the lens 10, namely, the clamp 24, a load of the motor, which rotates the shaft 24, is changed according to materials and thickness of the lens 10, and if the load accesses a certain level, it causes an error in rotational displacement to rotate the lens 10.

In order to reduce the friction force by the diamond wheel 20, milling methods for cutting off an unnecessary part of the rim of a lens by using a milling cutter which is a rotary-type cutting tool with a small contact area have been developed (Refer to U.S. Patent Nos. 8,087,150 and 8,128,463). FIG. 2 illustrates a process for processing a round lens by the milling method according to a prior art. In FIG. 2, the upper part of the drawing partially shows the side of the lens and the lower part of the drawing shows the front (surface) of the lens. In the milling method illustrated in FIG. 2, a groove 10a of a first depth, for instance, a shallow depth of 0.25mm, (A of FIG. 2) is continuously formed in the thickness direction of the lens 10 while the lens 10 or the milling cutter 30 moves along an arbitrary processing path 12 or 14. After the groove 10a of the first depth is formed, the milling cutter 30 is moved further in the thickness direction of the lens 10, a groove 10b of a shallow depth (second depth) is formed deeper in the position of the groove 10a of the first depth, and simultaneously, the groove 10b of the second depth is continuously formed along the processing path 12 or 14 while the lens 10 or the milling cutter 30 is moved along the processing path 12 or 14 (B of FIG. 2). When the above process is repeated, grooves 10c and 10d which are still deeper are formed (See C and D of FIG. 2), and finally, a cut portion 10e is formed along the processing path 12 or 14, and hence, the unnecessary part 18 of the rim of the lens is cut off and removed from an eyeglass lens part 16 of the central part of the lens (See E of FIG. 2). As illustrated in FIG. 2, the processing path 12 or 14 for cutting off the unnecessary part 18 of the rim of the lens may be a round processing path 12 which is slightly larger than the wanted eyeglass lens (indicated by a dotted line in FIG. 2) or may be a straight processing path 14 extending radially from the shape of the eyeglass lens. When the round processing path 12 and the straight processing path 14 are all used, the unnecessary parts 18 of the rim of the lens can be divided into several fragments and removed. As described above, because the milling work of the shallow depth is repeatedly carried out several times along the same processing path 12 or 14 and the lens 10 is abraded by a cutting blade formed at the end of the milling cutter 30, the contact area between the milling cutter 30 and the lens 10 is minimized. Therefore, the milling method according to the prior art can reduce the rotational error (error in distance of the rotational direction) by position deviation of the lens 10 and an overload of the motor due to the friction force applied to the lens 10. Also the milling method according to the prior art can more effectively reduce the friction load and the motor load compared with the processing method to cut off the unnecessary part of the rim of the lens 10 at a time.

However, in the milling method according to the prior art illustrated in FIG. 2, the milling of the shallow depth is repeatedly carried out several times along the same processing path 12 or 14, so, in each milling step, scraps of the lens abraded by the milling cutter 30 are not easily removed from the lens 10 but are stuck on the milling cutter 30 or put between the lens 10 and the milling cutter 30. Therefore, the scraps of the lens act as the rotational load of the milling cutter 30 and causes vibration of the milling cutter 30. Particularly, in the final milling step (E of FIG. 2) for cutting the lens 10, lots of scraps of the lens are accumulated and the eyeglass lens part 16 of the central portion of the lens and the unnecessary parts 18 of the rim of the lens are connected with the thin lens part, so severer vibration of the milling cutter 30 is generated. In general, when a hole or a groove is formed by using a milling cutter 30 of a single-blade structure, parts (scraps) abraded by the milling cutter 30 are discharged to the rear of the milling cutter 30, for instance, in the form of a single string. However, in the eyeglass lens processing, because the amount produced from a processing of the groove in the depth direction at a time is very small, the scraps of the lens is generated in the form of dust. Therefore, in the lens processing method of FIG. 2, during the lens 10 is processed from the A status to the E status, lots of lens scraps are stuck on the milling cutter 30 or are accumulated in the space where the lens 10 is processed. That is, the amount of scraps remaining inside the lens 10 or stuck on the milling cutter 30 is much than that of the scraps discharged to the outside of the lens 10 in the form of dust along the blade of the cutter 30. Therefore, the milling method according to the prior art can reduce the processing amount of the lens 10 processed at a time and minimize the friction force generated, but it has a disadvantage of causing vibration of the milling cutter 30 and parts of the milling cutter 30 because the grater friction force than expected is generated by the scraps formed when the lens 10 is processed. Especially, if the lens 10 is made of a material with high hardness and elasticity, the scraps of the lens cause more severe vibration. Therefore, the milling methods disclosed in the prior arts have a disadvantage in that the milling cutter 30 and parts for supporting the milling cutter 30 are low in durability due to vibration applied to the milling cutter 30 and the parts for supporting the milling cutter 30.

### SUMMARY OF THE INVENTION

Accordingly, the present invention has been made to solve the above-mentioned problems occurring in the prior arts, and it is an object of the present invention to provide an apparatus and a method for processing an eyeglass lens using a milling cutter, which can effectively separate and remove unnecessary parts of the rim of a round lens.

It is another object of the present invention to provide an apparatus and a method for processing an eyeglass lens using a milling cutter, which can minimize mechanical load or vibration transferred to the milling cutter so as to provide a mechanically stable structure and to reduce a friction load and a motor load of a lens fixing shaft (clamp).

It is a further object of the present invention to provide an apparatus and a method for processing an eyeglass lens using a milling cutter, which can easily discharge out scraps of the lens generated during the lens processing work.

To achieve the above objects, the present invention provides a method for processing an eyeglass lens including the steps of: getting a milling cutter in contact with the surface of the eyeglass lens; and

moving the milling cutter along a single spiral processing path spirally surrounding an eyeglass lens part at the central part of the lens so that the milling cutter rotates around the eyeglass lens part several times with different paths and depths to form grooves of predetermined depths in the eyeglass lens, whereby the lens is cut and an unnecessary part of the rim of the eyeglass lens is separated and removed along a shape of the eyeglass lens part, wherein a width of each groove formed in each of rotation steps which form the single spiral processing path is partially overlapped with a width of groove formed in the former rotation step, and a depth of each groove formed in each rotation step is increased in every rotation step and finally, the lens is cut along the shape of the eyeglass lens part.

In another aspect of the present invention, the present invention provides an apparatus for processing an eyeglass lens including: a pair of clamps for fixing and mounting a lens; and a milling cutter adapted for forming grooves of predetermined depths in the lens so as to cut the lens by moving the milling cutter along a spiral processing path spirally surrounding an eyeglass lens part of the central part of the lens so that the milling cutter rotates around the eyeglass lens part several times with different paths and depths, wherein a width of the groove formed in each of rotation steps which form the single spiral processing path is partially overlapped with a width of the groove formed in the former rotation step, and a depth of the groove formed in each rotation step is increased in every rotation step, and finally, the lens is cut along the shape of the eyeglass lens part.

As described above, the apparatus and the method for processing an eyeglass lens according to the present invention can minimize the mechanical load or vibration so as to effectively separate and remove unnecessary parts of the rim of the round lens.

### BRIEF DESCRIPTION OF THE DRAWINGS

The above and other objects, features and advantages of the present invention will be apparent from the following detailed description of the preferred embodiments of the invention in conjunction with the accompanying drawings, in which:
FIG. 1 shows a process of processing a round lens using a diamond wheel according to a prior art;
FIG. 2 shows a process of processing a round lens using a milling method according to another prior art;
FIG. 3 shows a structure of an eyeglass lens processing apparatus according to one embodiment of the present invention;
FIG. 4 shows an example of a milling cutter usable in the present invention;
FIG. 5(A) is a front view and FIG. 5(b) is a side view of a lens processed by an eyeglass lens processing method according to one embodiment of the present invention;
FIG. 6 shows the depth of a groove formed in each of processing steps in an eyeglass lens processing method according to another embodiment of the present invention;
FIG. 7 is a front view of a lens preprocessed in order to carry out the eyeglass lens processing method according to the present invention;
FIG. 8 shows an example of a milling cutter part which is usable to the eyeglass lens processing apparatus according to the present invention;
FIG. 9 is a side view of the lens processed according to another embodiment of the present invention; and
[FIG. 10 is a side view of the lens processed according to still another embodiment of the present invention.

### DETAILED DESCRIPTION OF THE PREFERRED EMBODIMENT

Reference will be now made in detail to the preferred embodiments of the present invention with reference to the attached drawings. In the drawings, components with the same or similar functions as the prior arts have the same or similar reference numerals as the prior arts.

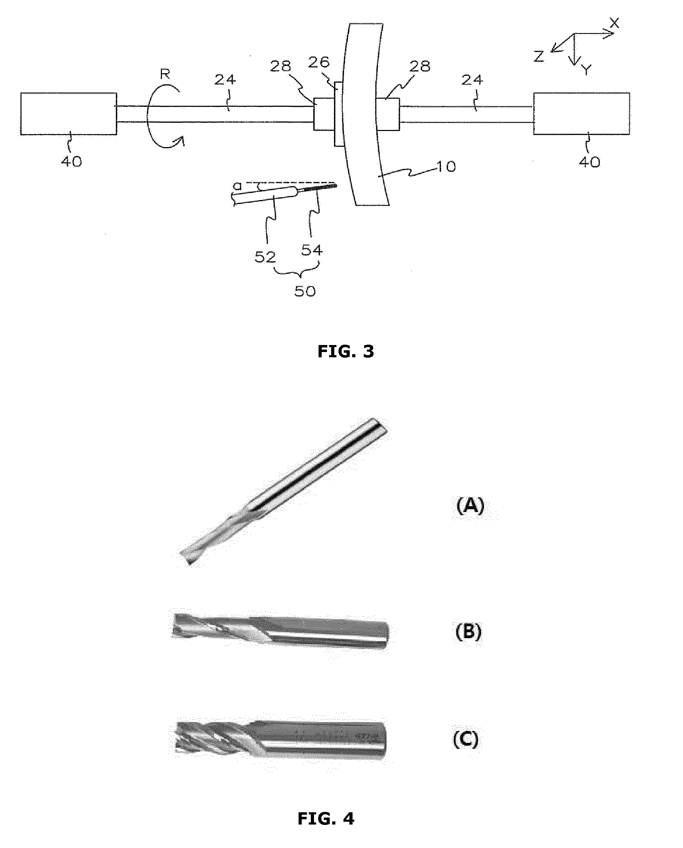

FIG. 3 shows a structure of an eyeglass lens processing apparatus according to one embodiment of the present invention. As illustrated in FIG. 3, the eyeglass lens processing apparatus according to the present invention includes a pair of clamps 24, clamp actuating parts 40, and a milling cuter part 50. A pair of clamps 24 is conventional means for fixing and mounting a lens 10 inside a lens edger in order to process the lens 10. Preferably, as illustrated in FIG. 3, a pair of the clamps 24 may be a pair of rotary shafts 24 located oppositely to each other. The rotary shafts 24 move in an axial direction (in the X-direction) so as to control a distance between the rotary shafts 24. Therefore, in the state where the rotary shafts 24 are spaced apart from each other, the lens 10 is located between the rotary shafts 24, and the lens 10 is fixed between the rotary shafts 24 after narrowing the distance between the rotary shafts 24. In this instance, as occasion demands, in order to firmly join the clamps 24 and the lens 10 with each other, a lens fixing tape 26 and a lens fixing block 28 are adhered onto one side or both sides of the lens 10, and the clamp 24 is joined to the lens fixing block 28.

The clamp actuating parts 40 are also conventional means for rotating and moving the lens 10 mounted on the clamps 24. The clamp actuating part 40 includes a motor (not shown in the drawings) for rotating the clamps 24 in the R direction and moves inside the lens edger in each direction (X, Y or Z direction) to thereby control the position of the lens 10. Therefore, the clamp actuating part 40 can rotate the lens 10 (in the R direction) or moves the lens 10 to a wanted location straightly (X, Y or Z direction). The structures and operations of a pair of the clamps 24 and the clamp actuating part 40 have been disclosed in detail, for instance, in Korean Patent No. 10-0645779 owned by the same applicant, which is incorporated in this specification. In the present invention, the movement and processing of the milling cutter part 50 relative to the lens 10 can be carried out (i) by moving the lens 10 by using the clamp actuating parts 40 when the position of the milling cutter part 50 is fixed or (ii) by moving the milling cutter part 50 when the position of the lens 10 is fixed, or, (iii) if necessary, by moving the lens 10 and the milling cutter part 50 at the same time. Here, the milling cutter part 50 and the clamp actuating parts 40 can be controlled by an automatic control device (not shown).

The milling cutter part 50 includes a milling cutter 54 for cutting the lens 10 and a cutter driving part 52 for rotating the milling cutter 54. The milling cutter 54 is an end milling cutter which has cutting teeth at the end and at sides. When the end of the milling cutter 54 gets in contact with the lens 10 while the milling cutter 54 rotates, like a drill, a groove is formed on the surface of the lens 10 by the cutting teeth formed at the end of the milling cutter 34 (formation of a groove, i.e., formation of a long, narrow cut or low area in a surface). In the meantime, when the side of the lens 10 gets in contact with the side of the rotating milling cutter 54, like a saw, the side of the lens 10 is cut off by rotation of the cutting teeth formed on the side of the milling cutter 34 (cutting). FIG. 4 shows an example of the milling cutter 54 usable in the present invention. As illustrated in FIG. 4, the milling cutter 54 used in the present invention can be varied in form and the number of the cutting teeth, and may be an end mill of a single blade structure (A of FIG. 4), an end mill of a double blade structure (B of FIG. 4), and an end mill of a four-blade structure (C of FIG. 4).

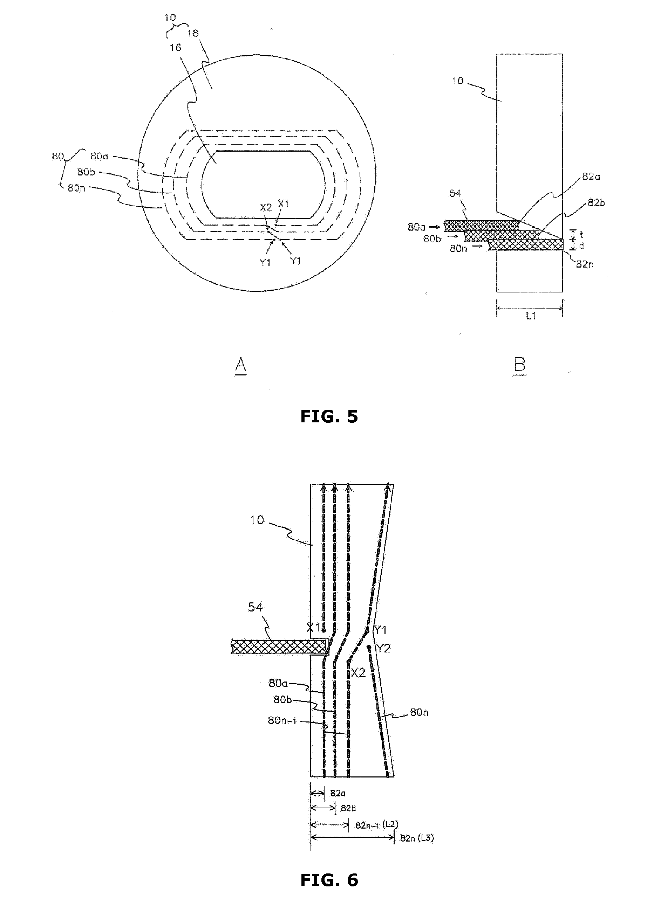

FIG. 5(A) is a front view and FIG. 5(b) is a side view of a lens processed by an eyeglass lens processing method according to one embodiment of the present invention. As illustrated in FIG. 5, in order to process the eyeglass lens according to the present invention, the milling cutter 34 gets in contact with the surface of the lens 10. The milling cutter 34 is moved along a spiral processing path 80 which spirally surrounds an eyeglass lens part 16 of the central portion of the lens 10. That is, the milling cutter 34 rotates around the eyeglass lens part 16 two times or more, to form grooves 80a, 80b, ...and 80n in the lens 10, thereby the lens is cut and an unnecessary part 18 of the rim of the lens is separated and removed. The width of the z(a circle shaped) grooves 80b,..., and 80n formed along the eyeglass lens part 16 in every rotation step are partially overlapped with the width of the grooves 80a,..., and 80n₋₁ formed in the former rotation steps, and depths 82a, 82b, ..., and 82n of the grooves 80a, 80b, ..., and 80n formed in each rotation step are increased more and more whenever the rotation steps are carried out. Finally, the lens 10 is cut along the shape of the eyeglass lens part 16, and hence, the unnecessary part 18 of the rim of the lens is separated and removed from the eyeglass lens part 16 of the central part of the lens 10. Here, the shape of the grooves 80a, 80b, ..., and 80n formed in every rotation step may be set arbitrarily if the grooves surround the eyeglass lens part 16 which is a lens part finally processed. There is no need to be similar with the shape of the eyeglass lens part 16, that is, the shape of the grooves can be properly set in such a way as to remove the unnecessary part 18 of the rim.

As illustrated in FIG. 5, because the processing path 80 where the milling cutter 54 moves is a spiral path, it is an open path that a start point X1 and an end point Y2 of the processing path 80 do not meet with each other. Preferably, the processing path 80 may be a spiral path which has no crossing part or completely overlapped part and does not include a closed path. Alternatively the processing path 80 may have a closed path in which the start point Y1 and the end point Y2 are connected with each other in only the groove 80n formed at the final rotation step. In order to partially overlap the widths of the grooves 80b, ..., and 80n formed in every rotation step along the eyeglass lens part 16 with the widths of the grooves 80a, ..., and 80n₋₁formed in every former rotation step, the diameter(d) of the milling cutter 54, namely, the widths(d) of the grooves 80a, ..., and 80n₋₁formed in every rotation step must be larger than movement widths(t) of the grooves 80a, ..., and 80n₋₁formed in every rotation step. Preferably, the movement width(t) is 1% to 99% of the diameter(d) of the milling cutter 54, preferably, 10% to 95%, and more preferably, 50% to 90%. Here, if the movement width (t) is larger than the diameter (d) of the milling cutter 54, the grooves 82a, 82b, ..., and 82n are formed discontinuously, and hence, there is no significance to use the spiral path 80. If the movement width (t) is too small, there is no sufficient space between the milling cutter 54 and the lens 10, and hence, vibration of the milling cutter 54 cannot be sufficiently suppressed. As described above, when the diameter(d) of the milling cutter 54 is larger than the movement width(t) of the processing paths 80b, ..., and 80n in every rotation step and the depths 82a, 82b, ..., and 82n of the grooves 80a, 80b, ..., and 80n formed in every rotation step are increased whenever the grooves 80a, 80b, ..., and 80n are formed in every rotation step, as illustrated in FIG. 5(B), the lens 10 has a stepped portion formed on the side thereof and a tapered groove is formed in the lens 10(See FIG. 5(B)).

The total number of the grooves 80a, 80b, ..., and 80n formed in the rotation steps for the spiral processing path 80 can be varied according to thickness and material of the lens 10 and the processable depths 82a, 82b, ..., and 82n of the grooves, but the total number of the grooves is more than two, preferably, two to forty, more preferably, three to ten, still more preferably, three to five. Furthermore, the depths 82a, 82b, ..., and 82n of the grooves formed in each rotation step can be also varied according to thickness and material of the lens 10 and the processable depths 82a, 82b, ..., and 82n of the grooves. However, the depths of the grooves can be set by properly distributing according to the number of the grooves 80a, 80b, ..., and 80n formed in the rotation steps to thereby abrade the entire thickness of the lens 10 during the spiral rotation processing, and preferably, can be set in such a way as to increase uniformly in consecutive order. Therefore, in the method for processing the eyeglass lens according to the present invention, the rotational diameter of the grooves 80b, ..., and 80n formed in every rotation step is increased or decreased spirally, and the processing depths 82a, 82b, ..., and 82n, namely loads, necessary for processing the grooves 80b, ..., and 80n formed in every rotation step are increased in consecutive order. Thus, the grooves 80a, ..., and 80n are formed with different paths and depths.

For instance, as illustrated in FIG. 5, if the number of the grooves 80a, 80b, ..., and 80n formed in the rotation steps is 3 and the thickness of the lens is L1, the depth 82a of the groove 80a formed in the first rotation step is L/3, the depth 82b of the groove 80b formed in the second rotation step is 2L/3, and the depth 82c of the groove 80c formed in the third rotation step is the same as the thickness L of the lens.

FIG. 6 shows the depths 82a, 82b, ..., 82n-1, and 82n of the grooves 80a, 80b, ..., 80n-1, and 80n formed in every rotation step in an eyeglass lens processing method according to another embodiment of the present invention. As shown in FIG. 6, the depths 82a, 82b, ..., 82n-1, and 82n of the grooves 80a, 80b, ..., 80n-1, and 80n formed in every rotation step may be increased equally from a start point 'X1' of the groove 80a formed in the first rotation step to the end point 'X2' of the groove 80n-1 just before the groove 80n formed in the final rotation step. For instance, when the processed thickness of the groove just before the final groove 80n is L2, while the depths 82a, 82b, ..., 82n-1, and 82n of the grooves 80a, 80b, ..., 80n-1 formed in every rotation step are increased by L1/(n-1), the grooves 80a, 80b, ..., and 80n-1 are processed. In the meantime, it is preferable that the processed depth L3 of the final groove 80n is increased much more than the increase amount of the processed depth of the previous grooves 80a, 80b, ... and 80n-1. As illustrated in FIG. 6, the reason is to completely penetrate and cut the lens 10 which has different thickness by positions.

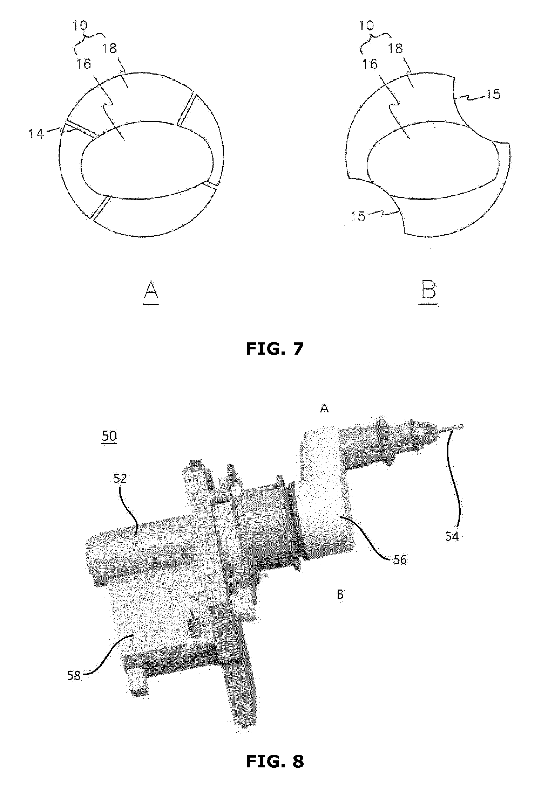

In the method for processing the eyeglass lens according to the present invention, because the depths 82a, 82b, ... and 82n of the grooves 80a, 80b, ..., and 80n are increased in consecutive order along the spiral processing path 80 so as to form a spirally stepped path of the open path type, even though the processing of the spiral processing path 80 is finished, the unnecessary part 18 of the rim of the lens may be not completely separated from the eyeglass lens part 16 of the central part of the lens. Moreover, even though the unnecessary part 18 of the rim of the lens is completely separated from the eyeglass lens part 16 by the spiral processing path 80, because the unnecessary part 18 of the rim is in the form of a doughnut, the clamps 24 are fit into the unnecessary part 18 of the rim, so that it is inconvenient to remove the unnecessary part 18 (See FIG. 3). Therefore, it is preferable to partially cut (preprocess) the rim of the lens 10 before the stepped or tapered grooves 80a, 80b, ..., and 80n are formed along the spiral processing path 80 by milling. FIG. 7 is a front view of a lens preprocessed in order to carry out the eyeglass lens processing method according to the present invention. As illustrated in FIG. 7, the preprocessing (cutting) may be carried out by cutting the blank lens 10 along the straight processing path 14 radially extending from the eyeglass lens part 16 to the rim of the lens 10 using a milling device, such as the milling cutter 54 (See FIG. 7(A)), or by abrading and removing at least one part 15 of the rim of the lens 10 using a roughing wheel, such as the diamond wheel (See FIG. 7(B)). As described above, after the rim of the lens 10 is partially cut or abraded, as shown in FIG. 5, when the grooves are formed along the spiral processing path 80, even though the closed path that the start point Y1 and the end point Y2 of the groove 80n formed in the final rotation step are connected together is not formed, the unnecessary part 18 of the rim of the lens can be separated from the eyeglass lens part 16 of the central part of the lens. Also preferably the unnecessary part 18 of the rim of the lens is not formed in the doughnut type but is divided into several fragments and removed.

In the method for processing the eyeglass lens according to the present invention, when the processing of the grooves 80a, 80b, ..., and 80n formed in every rotation step is progressed further, because the sides of the lens 10 are abraded in the direction of progress of the grooves 80a, 80b, ..., and 80n formed in the rotation steps and in the side direction (See FIG. 5), differently from the prior art illustrated in FIG. 2, an interval between the milling cutter 54 and the grooves 80a, 80b, ... and 80n is gradually increased, and the grooves 80a, 80b, ..., and 80n formed in every rotation step overall have a tapered shape which is gradually widened toward the rear (See FIG. 5(B)). Therefore, because scraps of the lens generated by abrasion of the lens 10 are easily discharged out through the rear, vibration generated from the milting cutter 54 can be minimized. Additionally, in order to move the lens 10 along the spiral processing path 80, the rotational movement (in the R direction) and the straight movement (in the Y and Z directions) of the lens 10 and clamps 24 must be properly realized using a three-axis motor of the clamp actuating part 40 (See FIG. 3). In this instance, because it is impossible to control the three-axis motor so as to completely realize a curvilinear movement of the lens 10, the curvilinear movement must be realized through small straight movements. Therefore, when the lens 10 is moved along the spiral processing path 80, a body part of the milling cutter 54 is inevitably bumped against the sides of the previously processed grooves 80a, 80b, ..., and 80n. However, in the present invention, because the grooves 80a, 80b, ..., and 80n respectively have a tapered shape which is gradually widened toward the rear, even though the lens 10 is moved, collision between the grooves 80a, 80b, ..., and 80n and the milling cutter 54 can be minimized, so that vibration of the milling cutter 54 can be effectively prevented.

FIG. 8 shows an example of a milling cutter part which is usable to the eyeglass lens processing apparatus according to the present invention. As illustrated in FIG. 8, the milling cutter part 50 usable in the present invention includes: the milling cutter 54; a module rotation part 56 for changing the position of the milling cutter 54 through rotation; a cutter actuating part 52 for rotating the milling cutter 54; and a module rotation part driving motor 58 for rotatably driving the module rotation part 56. The module rotation part 56 locates the milling cutter 54 to an 'A' position which is a milling processing position or to a 'B' position which is a standby position by rotating the milling cutter 54. When the milling cutter 54 is located at the 'A' position which is the milling processing position, the position of the milling cutter 54 is fixed just by a holding torque of the module rotation part driving motor 58. Therefore, when the lens is processed by the milling cutter 54, if a stronger power than the holding torque of the module rotation part driving motor 58 is generated, the position of the milling cutter 54 may be changed. Moreover, as illustrated in FIG. 8, the milling cutter 54 may be inclined at a predetermined angle (a) from a horizontal plane, namely, from the rotary shafts of the lens 10 and the clamps 24, for instance, within an angle range of 2 to 20 degrees, preferably, 5 to 15 degrees. As described above, when the cutter 54 is inclined at the predetermined angle, because the grooves 80a, 80b, ..., and 80n can be formed at right angles to the surface of the lens 10, the lens 10 can be processed more stably. As described above, when the position of the milling cutter 54 is controlled by the holding torque of the module rotation part driving motor 58 or when the milling cutter 54 is inclined at the predetermined angle from the horizontal plane, the minute vibration generated during the processing of the lens 10 and the movement of the lens 10 have a great influence on the milling cutter part 50.

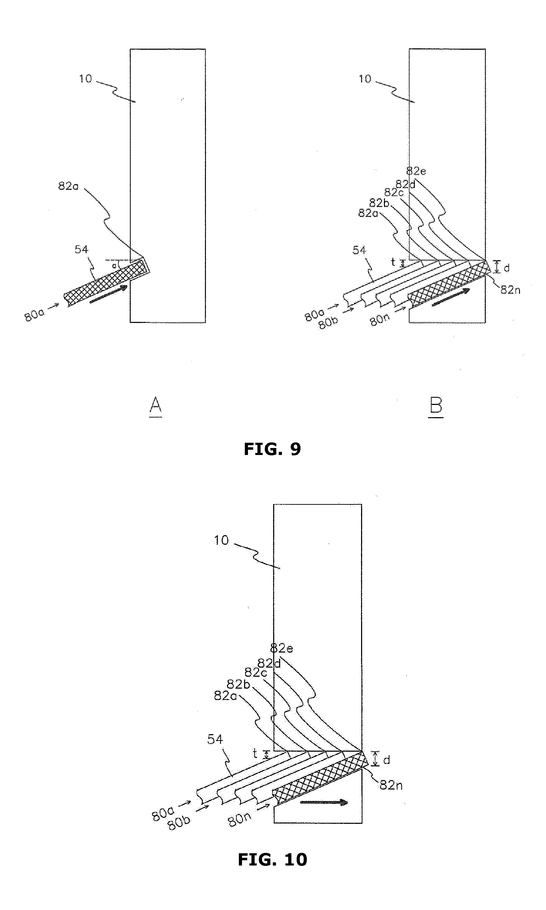

FIG. 9 is a side view of the lens processed according to another embodiment of the present invention. In this embodiment, the front view of the processed lens is the same as FIG. 5(B). As illustrated in FIG. 9, the rotary shafts of the lens 10 and the clamps 24 and the rotary shaft of the milling cutter 54 are inclined at a predetermined angle (a), for instance, 2 to 20 degrees, preferably, 5 to 15 degrees. Furthermore, when the groove 80a formed in the first rotation step, the lens 10 or the milling cutter 54 moves in the inclination direction of the predetermined angle (a), namely, in the direction of the rotary shaft of the milling cutter 54 (in the arrow direction of FIG. 9(A)). Next, when the groove 80b formed in the second rotation step is formed, the lens 10 ascends to a predetermined distance (t) or the milling cutter 54 descends to the predetermined distance (t), and then, the second rotation step is carried out (by moving along the processing path), so that the spiral processing path in which the groove 80a formed in the first rotation step and the groove 80b formed in the second rotation step are partially overlapped is formed (in this instance, in the same principle as the above, the movement distance (t) is smaller than the width (d) of the groove formed in the lens 10). The grooves 80a, 80b, ..., and 80n formed in the rotation steps are processed in order in the same way so as to form the spiral processing path 80 (See FIG. 9(B)). When the grooves are inclinedly processed in the lens 10 along the spiral processing path 80, the eyeglass lens part 16 of the central part of the lens can be processed into a shape similar with the wanted eyeglass lens, and the eyeglass lens processing apparatus according to the present invention can easily discharge out the lens scraps and reduce vibration of the milling cutter 54 because entrance parts of the processed grooves 80a, 80b, ..., and 80n are wide.

FIG. 10 is a side view of the lens processed according to still another embodiment of the present invention. In this embodiment, like the embodiment illustrated in FIG. 9, the rotary shafts of the lens 10 and the clamps 24 and the rotary shaft of the milling cutter 54 are inclined at a predetermined angle (a). However, in this embodiment, when the grooves 80a, 80b, ..., and 80n formed in the rotation steps are formed in the lens 10, relative to the milling cutter 54 inclined at the predetermined angle(a), the lens 10 or the milling cutter 54 moves in the horizontal direction (in the arrow direction of FIG. 10), the depths 82a, 82b, ..., and 82n of the grooves 80a, 80b, ..., and 80n are gradually increased in every rotation step and the widths of the grooves 80a, 80b, ..., and 80n are also gradually increased, and hence, the grooves 80a, 80b, ..., and 80n formed in every rotation steps actually form the spiral processing path 80.

As illustrated in FIGS. 9 and 10, the rotary shafts of the milling cutter 54 is inclined at the predetermined angle relative to the rotary shaft of the lens 10, and the milling cutter 54 enters the lens 10 in the state where it is inclined at the predetermined angle so as to abrade the lens 10, and then, when the milling cutter 54 moves along the spiral processing path 80, the grooves 80a, 80b, ... and 80n with the rear of the widely tapered form can be formed. The angle between the rotary shaft of the milling cutter 54 and the rotary shaft of the abraded lens 10 may be varied according to materials and hardness of the lens 10 and one cutting depth of the lens 10. That is, in order to control a friction load by controlling an amount of the lens 10 to be processed, an inclination angle and/or an entrance angle of the milling cutter 54 are controlled. Moreover, when the inclination angle and/or entrance angle of the milling cutter 54 are controlled, a discharge level of the lens scraps and the distance (space) between the milling cutter 54 and the lens 10 can be controlled. Furthermore, the inclination angle and/or entrance angle of the milling cutter 54 can be controlled according to an outward shape 16 of the lens to be processed.

According to the method for processing the eyeglass lens according to the present invention, because the grooves 80a, 80b, ... and 80n are formed along the spiral single path 80 which has no closed path, the processing of the grooves 80a, 80b, ... and 80n formed in the rotation steps is progressed more, the widths of the grooves 80a, 80b, ... and 80n are increased into the tapered shape. In other words, the sectional areas of the progressed grooves 80a, 80b, ...and 80n are gradually increased in proportion to the depths of the progressed grooves 80a, 80b, ... and 80n, so that the present invention can easily discharge out the lens scraps and reduce vibration of the milling cutter 54.

## Claims

1. A method for processing a lens comprising the steps of:
getting a milling cutter in contact with the surface of the lens; and
moving the milling cutter along a single spiral processing path spirally surrounding an eyeglass lens part at the central part of the lens so that the milling cutter rotates around the eyeglass lens part several times with different paths and depths, to form grooves of predetermined depths in the lens, whereby the lens is cut and an unnecessary part of the rim of the lens is separated and removed along a shape of the eyeglass lens part,
wherein a width of each grooves formed in each of rotation steps which form the single spiral processing path is partially overlapped with a width of groove formed in the former rotation step, and a depth of each groove formed in each rotation step is increased in every rotation step and finally, the lens is cut along the shape of the eyeglass lens part.

2. The lens processing method according to claim 1, wherein the spiral processing path in which the milling cutter moves or rotates is an open path that a start point and an end point of the processing path do not meet with each other.

3. The lens processing method according to claim 1, wherein the spiral processing path in which the milling cutter moves, is a closed path that just the groove formed in the final rotation step has a start point and an end point meeting with each other.

4. The lens processing method according to claim 1, wherein a diameter(d) of the milling cutter is larger than a movement width(t) of the grooves formed in every rotation step, such that the width of the groove formed in each rotation step is partially overlapped with the width of the groove formed in the former rotation step.

5. The lens processing method according to claim 4, wherein the movement width(t) is 1% to 99% of the diameter(d) of the milling cutter.

6. The lens processing method according to claim 1, wherein the total number of the grooves formed in the rotation steps for forming one spiral processing path is two to forty.

7. The lens processing method according to claim 1, wherein the diameters of the grooves formed in every rotation step are spirally increased or decreased, and the depths necessary for processing the grooves formed in every rotation step are increase in sequence order.

8. The lens processing method according to claim 1, further comprising the step of:
partially cutting the rim of the lens along a straight processing path radially extending from the eyeglass lens part to the rim of the lens, before the step of getting the milling cutter in contact with the surface of the lens.

9. The lens processing method according to claim 1, further comprising the step of:
abrading and removing at least one part of the rim of the lens using a roughing wheel, before the step of getting the milling cutter in contact with the surface of the lens.

10. The lens processing method according to claim 1, wherein rotary shafts of the lens and the milling cutter are inclined at an angle of 2 to 20 degrees, the lens or the milling cutter moves in the inclination direction of the predetermined angle to form the groove, which is formed in the first rotation step, in the lens, and the second rotation step is carried out after the lens ascends to a predetermined distance or the milling cutter descends to a predetermined distance when the groove formed in the second rotation step is formed, such that the spiral processing path that the groove formed in the first rotation step and the groove formed in the second rotation step are partially overlapped.

11. An apparatus for processing a lens comprising:
a pair of clamps for fixing and mounting a lens; and
a milling cutter adapted for forming grooves of predetermined depths in the lens so as to cut the lens by moving the milling cutter along a spiral processing path spirally surrounding an eyeglass lens part at the central part of the lens so that the milling cutter rotates around the eyeglass lens part several times with different paths and depths,
wherein a width of the groove formed in each of rotation steps which form a single spiral processing path is partially overlapped with a width of the groove formed in the former rotation step, and a depth of the groove formed in each rotation step is increased in every rotation step, and finally, the lens is cut along the shape of the eyeglass lens part.

12. The lens processing apparatus according to claim 11, wherein the milling cutter is an end milling cutter having cutting teeth at an end and sides thereof.

13. The lens processing apparatus according to claim 11, wherein the milling cutter is inclined at an angle of 2 to 20 degrees relative to rotary shafts of the lens and the clamps.
